# EUROPEAN PATENT APPLICATION

(11) **EP 4 338 582 A1**
(43) Date of publication of application: **20.03.2024**
(21) Application number: 23198245.5
(22) Date of filing: 19.09.2023
(51) Int. Cl.: A01F 15/07, A01F 15/10

(54) **A BALER AND A METHOD FOR CLEARING A BLOCKAGE IN AN INFEED SYSTEM IN A BALER**

(30) Priority: 19.09.2022 IE S20220152
(71) Applicant: McHale Engineering Unlimited Company, Ballinrobe, County Mayo (IE)
(72) Inventor: McHale, Padraic, Christopher, Tumneenane, Clonbur, County Galway, (IE); McHale, Martin, William, Kilmaine Village, Kilmaine, County Mayo, (IE); McHale, Paul, Gerard, 13 Riverside, Woodquay, Galway, (IE); Biggins, John, Patrick, 30 Hillcrest, Claremorris, County Mayo, (IE); Warren, John, Alexander, Coolylaughnan, Hollymount, County Mayo, (IE)
(74) Representative: Gorman, Francis Fergus

(57) **Abstract**

A roller baler (3) comprises a chassis (5) and a fixed segment (14) rigidly secured to the chassis (5), a tipping segment (15) and a closure segment (16), each of which carry a plurality of bale rotating rollers (17, 18, 19) which define a bale chamber (22), within which a bale is rotated, pressed and formed to a selectable bale density. The closure segment (16) is pivotal about a main pivot axis (35) from a closed state to an open state for accommodating a bale from the bale chamber (22). An infeed system (12) picks up crop material and feeds the crop material into the bale chamber (22). A pair of main double-acting hydraulic rams (40) acting between the chassis (5) and the closure segment (16) operate the closure segment (16) between the closed state and the open state, and apply pressure to the bale being formed in the bale chamber (22) for forming the bale to the selected bale density. A pressure regulator (54) controls the pressure of hydraulic fluid applied to the main rams (40) at a selectable density pressure for controlling the pressure applied by the main rams (40) to the closure segment (16). A microcontroller (50) controls the pressure regulator (54) to reduce the pressure of the hydraulic fluid applied to the main rams (40) in response to a blockage occurring in the infeed system (12), so that on restarting the baler, the power drawn by the baler to rotate the bale is reduced, thereby increasing the available power to the infeed system (12) to clear the blockage therein.

## Description

The present invention relates to a method for clearing a blockage in an infeed system to a baler, and the invention also relates to a baler.

Balers for baling material, for example, crop material for animal feed and bedding are well known. Typically, such balers are configured to produce cylindrical bales, which are commonly referred to as round bales, and such round bales may be of diameter in the range of 500mm to 2000mm and of axial length ranging from 1000mm to 1300mm. More typically, such round bales are of diameter in the range of 1100mm to 1400mm and of axial length in the range of 1100mm to 1300mm. Such balers for producing round bales may either be fixed chamber balers, roller balers or belt balers. Fixed chamber balers and roller balers comprise a bale chamber, the outer circumferential periphery of which is defined by a plurality of bale rotating rollers which rotate the bale in the bale chamber. Belt balers, on the other hand, in general, comprise a plurality of belts which are arranged side-by-side on rotatably mounted rollers, some of which are driven rollers, and some of the rollers are located in fixed positions, and others of the rollers are tensioning rollers, which are provided to induce and to control tension in the belts as the bale is being formed. The belts define a bale chamber of increasing size as the bale is being formed. Such fixed chamber, roller and belt balers will be well known to those skilled in the art.

In general, such belt, roller and fixed chamber balers comprise an infeed system. The infeed system is configured to pick the crop material from the ground as the baler is being towed forwardly along a sward of the crop material lying in a field, and to feed the crop material into the bale chamber. In general, the infeed system comprises a pick-up mechanism which picks up the crop material from the sward thereof, and an infeed platform, along which the crop material is urged from the crop pick-up mechanism into the bale chamber. Typically, a chopping rotor is rotatably mounted above the infeed platform for chopping crop material into relatively short lengths, and for urging the chopped crop material along the infeed platform into the bale chamber. Although in some cases the chopping function of the chopping rotor may be selectively disabled, and in which case the chopping rotor acts to urge the crop material along the infeed platform into the bale chamber.

Under certain conditions of the crop material, such infeed systems are susceptible to blockages due to an agglomeration of crop material forming in the infeed system, and in particular adjacent the chopping rotor. On a blockage occurring in the infeed system, an overload clutch of the baler transitions from an engaged state to a disengaged state in order to avoid damage to the drive transmission systems of the baler. Such an overload clutch is typically located between the power input shaft and the main gearbox of the baler. The power input shaft of the baler is the input shaft to which power is connected to the baler from the power take-off shaft of the tractor towing the baler, and is typically coupled to the power take-off shaft by a Cardan shaft. The main gearbox of the baler receives power from the power input shaft through the overload clutch and distributes the power to the bale rotating rollers of the bale chamber for rotating the bale rotating rollers, and in turn for rotating the bale in the bale chamber, and to the infeed system for powering the pick-up mechanism and the chopping rotor for urging the picked-up crop material along the infeed platform into the bale chamber.

Once the overload clutch transitions into the disengaged state, an alert signal is transmitted to the driver of the tractor, which typically, is an audio alert signal, and may also include a message displayed on a display panel in the cab of the tractor alerting the driver of the tractor to the state of the overload clutch and the blockage in the infeed system. The display panel, as well as displaying a message indicating the transitioning of the overload clutch into the disengaged state, also displays other relevant data and information relating to the baler and its operation.

In order to return the overload clutch to the engaged state for transmitting power therethrough, power to the overload clutch must be deactivated, in order to reset the overload clutch into the engaged state. This, requires the driver of the tractor to disengage the power take-off shaft of the tractor from the drive system of the tractor, in order to reset the overload clutch. Prior to reengaging the power take-off shaft of the tractor with the driving system of the tractor, either the driver must lower the infeed platform of the infeed system from the chopping rotor in order to allow the blockage to more easily pass between the infeed platform and the chopping rotor, or the control system of the baler on detecting the overload clutch being in the disengaged state may automatically lower the infeed platform. Once the infeed platform has been lowered, power may then be re-applied to the baler.

However, in cases where blockages occur when the bale being formed in the bale chamber is nearing completion, and typically, is of 90% of its full size, significant difficulties can arise in restarting the baler to clear the blockage, since the power available to clear the blockage in the infeed system is considerably reduced, since the majority of power being transmitted to the baler is being drawn by the bale rotating rollers to rotate the nearly formed bale in the bale chamber. Thus, in such circumstances, the tractor driver may have to make a number of attempts to restart the baler in order to clear the blockage. This is undesirable, since it results in extra loading being applied to the drive transmission of the baler, and also can lead to significant delays, and therefore loss of productivity.

There is therefore a need for a baler which addresses this problem, and there is also a need for a method for clearing blockage in the infeed system of a baler.

The present invention is directed towards providing such a baler and such a method.

According to the invention there is provided a method for clearing a blockage in an infeed system in a baler, the baler comprising a pressing means adapted to rotate and press material to form the material into a cylindrical bale, and the infeed system to feed the material into the pressing means, wherein the method comprising reducing the pressure applied by the pressing means to the material therein on a blockage occurring in the infeed system.

In one embodiment of the invention the pressure applied by the pressing means to the material therein is reduced by a predefined amount, and preferably, the pressure applied by the pressing means to the material therein is reduced by a predefined amount from the pressure applied by the pressing means to the material therein just prior to the occurrence of the blockage, and advantageously, the pressure applied to the pressing means to the material therein is reduced by a predefined amount from a pressure at which the pressing means is set to apply to the material therein to produce a formed bale to a predefined bale density.

In another embodiment of the invention the predefined amount, by which the pressure being applied by the pressing means to the material therein is reduced, lies in the range of 50% to 90% of the pressure at which the pressing means is set to press the material therein, or lies in the range of 50% to 90% of the pressure applied by the pressing means to the material therein just prior to the occurrence of the blockage.

In one embodiment of the invention the predefined amount, by which the pressure being applied by the pressing means to the material therein is reduced, lies in the range of 50% to 85% of the pressure at which the pressing means is set to press the material therein, or lies in the range of 50% to 85% of the pressure applied by the pressing means to the material therein just prior to the occurrence of the blockage.

Preferably, the predefined amount, by which the pressure being applied by the pressing means to the material therein is reduced, lies in the range of 70% to 80% of the pressure at which the pressing means is set to press the material therein, or lies in the range of 70% to 80% of the pressure applied by the pressing means to the material therein just prior to the occurrence of the blockage.

Advantageously, the predefined amount, by which the pressure being applied by the pressing means to the material therein is reduced, is approximately 80% of the pressure at which the pressing means is set to press the material therein, or is approximately 80% of the pressure just prior to the occurrence of the blockage.

In one embodiment of the invention if the bale being formed in the pressing means exceeds a predefined size, the pressure applied by the pressing means to the material therein in the pressing means is automatically reduced, otherwise, the pressure applied by the pressing means to the material therein is manually reduced.

Preferably, the pressure applied by the pressing means to the material therein is reduced if the bale being formed in the pressing means is equal to or exceeds a predefined size.

In one another embodiment of the invention the predefined size of the bale is 20% of the full size to which the bale is to be formed by the pressing means.

In another embodiment of the invention the predefined size of the bale is 25% of the full size to which the bale is to be formed by the pressing means.

In another embodiment of the invention the predefined size of the bale is 50% of the full size to which the bale is to be formed by the pressing means.

In another embodiment of the invention the predefined size of the bale is 70% of the full size to which the bale is to be formed by the pressing means.

Preferably, the predefined size of the bale is 80% of the full size to which the bale is to be formed by the pressing means.

Advantageously, the predefined size of the bale is 90% of the full size to which the bale is to be formed by the pressing means.

In one embodiment of the invention the size of the bale being formed by the pressing means is determined by one of the volume of the bale and the weight of the bale.

In another embodiment of the invention the pressure applied by the pressing means to the material therein is maintained at the reduced pressure until the blockage has been cleared.

In one embodiment of the invention the pressing means comprises at least one pressure inducing hydraulic ram for applying the pressure to the material therein, and the pressure applied to the material in the pressing means is reduced by reducing pressure of hydraulic fluid applied to the at least one pressure inducing ram.

In another embodiment of the invention the pressure applied by the pressing means to the material therein is increased after the blockage has been cleared, and preferably, the pressure applied by the pressing means to the material therein is increased to the pressure at which the pressing means is set to press the material therein to produce the formed bale to a predefined bale density, or to the pressure applied by the pressing means to the material therein just prior to the occurrence of the blockage.

In one embodiment of the invention the pressing means comprises at least two parts which together define a bale chamber in which the bale is rotated, pressed and formed, at least one of the parts being moveable relative to the other part from a closed state defining the bale chamber to an open state for accommodating discharge of a formed bale from the bale chamber, and pressure is applied to press the material in the bale chamber by applying pressure to one of the parts of the pressing means for retaining the two parts thereof in the closed state.

In another embodiment of the invention the pressing means comprises at least two parts, which together define a bale chamber in which the bale is rotated, pressed and formed, at least one of the parts being moveable relative to the other one of the parts from a closed state defining the bale chamber to an open state for accommodating discharge of a bale from the bale chamber, and the at least one pressure inducing hydraulic ram cooperates with the moveable part for applying pressure to the crop material in the pressing means.

In one embodiment of the invention the pressure applied to the material in the bale chamber is reduced by reducing the pressure being applied to the one of the parts of the pressing means.

Preferably, the pressure applied to the material in the bale chamber is reduced by reducing the pressure applied to the one of the two parts of the pressing means to maintain the two parts thereof in the closed state.

In another embodiment of the invention the pressure applied to the material in the bale chamber is applied to the moveable part of the pressing means.

In another embodiment of the invention the pressure applied to the material in the bale chamber is reduced by moving the moveable part of the pressing means from the closed state, and preferably, by moving the moveable part of the pressing means a predefined amount from the closed state.

In one embodiment of the invention the two parts of the pressing means are pivotally connected together about a main pivot axis, and preferably, the moveable part of the pressing means is pivotal about the main pivot axis from the closed state thereof.

In one embodiment of the invention the moveable part of the pressing means defines approximately 180° of the circumferential surface of the bale chamber, and advantageously, the main pivot axis extends substantially parallel to a central axis defined by the bale chamber. Preferably, the moveable part of the pressing means is pivotally connected to the other part thereof adjacent one end of the moveable part.

In another embodiment of the invention each part of the pressing means comprises a plurality of bale rotating rollers rotatably mounted about respective parallel rotational axes, the bale rotating rollers defining the outer circumferential periphery of the bale chamber and preferably, the main pivot axis extends substantially parallel to the rotational axes of the bale rotating rollers.

In another embodiment of the invention the moveable part of the pressing means is moved from the closed state the predefined amount for reducing the pressure applied to the material in the bale chamber by pivoting the moveable part from the closed state about the main pivot axis through a predefined angular distance lying in the range of 0.1° to 5°.

In another embodiment of the invention the moveable part of the pressing means is pivoted from the closed state about the main pivot axis through the predefined angular distance lying in the range of 1 ° to 3.5° to reduce the pressure applied to the material in the bale chamber.

In another embodiment of the invention the moveable part of the pressing means is pivoted from the closed state about the main pivot axis through a predefined angular distance of approximately 2° to reduce the pressure applied to the material in the bale chamber.

In one embodiment of the invention the moveable part of the pressing means is moveable automatically from the closed state through the predefined distance for reducing the pressure applied by the pressing means to the material therein, and in another embodiment of the invention the moveable part of the pressing means is moveable manually from the closed state through the predefined distance for reducing the pressure applied by the pressing means on the material therein.

In one embodiment of the invention the pressing means comprises at least one belt defining a bale chamber and configured to rotate and press the material in the bale chamber, the at least one belt being tensioned by the at least one pressure inducing ram for applying pressure to the material in the bale chamber.

In another embodiment of the invention the baler comprises a belt baler adapted to produce a cylindrical bale comprising at least one belt acting as the pressing means, and the pressure applied by the at least one belt to the material being formed into a bale is reduced by reducing the tension in the at least one belt, and preferably, the pressure applied by the at least one belt to the material being formed into a bale is reduced by reducing the tension in the at least one belt by a predefined amount from the tension in the at least one belt just prior to the occurrence of the blockage or from the tension to be induced in the at least one belt to produce the formed bale of a predefined bale density.

In another embodiment of the invention the belt baler comprises a plurality of belts arranged side-by-side relative to each other.

Advantageously, the one or more belts of the belt baler are configured to define a bale chamber of increasing diameter as the bale is being formed.

Preferably, the one or more belts are carried on a plurality of rotatably mounted rollers, some of which rollers are fixed in position, and at least one of the rollers is a moveable roller and is moveable for applying and controlling tension in the one or more belts.

In another embodiment of the invention a tensioning means is provided for tensioning the tensioning roller.

In one embodiment of the invention the pressure applied to the material by the one or more belts is reduced by reducing the tension applied to the one or more belts by the tensioning roller.

In another embodiment of the invention the infeed system is urged into a relief state to at least partly relieve the blockage on the occurrence thereof.

Preferably, the infeed system is configurable from an operational state for urging material into the pressing means, and a relief state to at least partly relieve a blockage occurring therein.

In another embodiment of the invention the blockage is detected by monitoring a characteristic of power being drawn by the baler, and preferably, the characteristic of the power being drawn by the baler is monitored by monitoring a characteristic of the power applied to the baler from a power take-off shaft of a towing vehicle powering the baler.

In another embodiment of the invention the characteristic of the power being applied to the baler from the power take-off shaft of the towing vehicle is monitored by reading the characteristic of the power being applied to the power take-off shaft of the tractor from the tractor, and preferably, the characteristic of the power being applied to the power take-off shaft of the tractor is read from an ISOBUS CAN network of the tractor.

Additionally, the invention provides a baler comprising a pressing means adapted to rotate and press material to form the material into a cylindrical bale, an infeed system to feed the material into the pressing means, wherein a control means is responsive to a signal indicative of the occurrence of a blockage in the infeed system for reducing the pressure applied by the pressing means to the material therein.

In one embodiment of the invention the control means is adapted to reduce the pressure applied by the pressing means to the material therein by a predefined amount from the pressure applied by the pressing means to the material therein just prior to the occurrence of the blockage or from a pressure at which the pressing means is set to apply to the material therein.

In another embodiment of the invention the predefined amount by which the pressure applied by the pressing means to the material therein is reduced lies in the range of 50% to 90% of a pressure at which the pressing means is set to press the material therein, or lies in the range of 50% to 90% of the pressure applied by the pressing means to the material therein just prior to the occurrence of the blockage.

In another embodiment of the invention the predefined amount by which the pressure applied by the pressing means to the material therein is reduced lies in the range of 70% to 85% of the pressure at which the pressing means is set to press the material therein, or lies in the range of 70% to 85% of the pressure applied by the pressing means to the material therein just prior to the occurrence of the blockage.

In another embodiment of the invention the predefined amount by which the pressure applied by the pressing means to the material therein is reduced is approximately 80% of the pressure at which the pressing means is set to press the material therein, or is approximately 80% of the pressure applied by the pressing means to the material therein just prior to the occurrence of the blockage.

In one embodiment of the invention the control means is adapted to automatically reduce the pressure applied by the pressing means to the material therein in response to the bale in the pressing means exceeding a predefined size, and to produce an alert signal advising of the need to reduce the pressure applied by the pressing means to the material therein in response to the bale in the pressing means failing to exceed the predefined size.

In one embodiment of the invention an interface means is provided to permit the pressure applied by the pressing means to the material therein to be manually reduced.

Preferably, the interface means comprises a means for manually inputting a signal to the control means for reducing the pressure applied by the pressing means to the material therein.

Advantageously, the interface means comprises one of a touch screen a keypad and a manual electrical switch.

In one embodiment of the invention the predefined size of the bale is 20% of the full size to which the bale is to be formed by the pressing means.

In another embodiment of the invention the predefined size of the bale is 25% of the full size to which the bale is to be formed by the pressing means.

In another embodiment of the invention the predefined size of the bale is 50% of the full size to which the bale is to be formed by the pressing means.

In another embodiment of the invention the predefined size of the bale is 70% of the full size to which the bale is to be formed by the pressing means.

In another embodiment of the invention the predefined size of the bale is 80% of the full size to which the bale is to be formed by the pressing means.

In a further embodiment of the invention the predefined size of the bale is 90% of the full size to which the bale is to be formed by the pressing means.

In another embodiment of the invention the control means is adapted to read a signal indicative of the size of the bale in the pressing means, and preferably, from a bale size monitoring means of the pressing means.

In another embodiment of the invention the control means is adapted to read the signal indicative of the size of the bale in the pressing means indicative of the volume of the bale or the weight of the bale.

Preferably, the control means is adapted to maintain the pressure applied by the pressing means to the material therein at a reduced pressure until the blockage has been cleared.

In another embodiment of the invention the control means is adapted to increase the pressure applied by the pressing means to the material therein in response to the blockage having been cleared, and preferably, the control means is responsive to the blockage having been cleared to increase the pressure applied by the pressing means to the material therein to the pressure at which the pressing means is set to produce the formed bale to the predefined bale density, or to the pressure applied by the pressing means to the material therein just prior to the occurrence of the blockage.

In another embodiment of the invention the pressing means comprises an overload cut-out means adapted to operate in an engaged state to transmit power therethrough and in a disengaged state to prevent transmission of power therethrough in response to the occurrence of a blockage in the infeed system.

Preferably, the control means is adapted to read a signal indicative of a characteristic of power being applied to the overload cut-out means, and a signal indicative of a characteristic of power being transmitted from the overload cut-out means, and preferably, the control means is adapted to determine the presence of a blockage in the infeed system in response to the difference of the signal indicative of the characteristic of the power being applied to the overload cut-out means and the signal indicative of the characteristic of the power being transmitted from the overload cut-out means.

In one embodiment of the invention the control means is adapted to determine the presence of a blockage in the infeed system in response to the signal indicative of the characteristic of the power being applied to the overload cut-out means being indicative of power being applied to the overload cut-out means and the signal indicative of the characteristic of the power being transmitted from the overload cut-out means being indicative of no power being transmitted from the overload cut-out means.

In one embodiment of the invention the baler is adapted to be towed and powered by a towing vehicle, and preferably, the control means is adapted to read the signal indicative of the characteristic of the power being applied to the overload cut-out means from the towing vehicle, and preferably, from an ISOBUS of a CAN network of the towing vehicle.

In another embodiment of the invention the infeed system is operable in an operational state for feeding material into the pressing means, and in a relief state for relieving a blockage in the infeed system, and preferably, the control means is adapted to operate the infeed system from the operational state to the relief state in response to the occurrence of a blockage therein.

Advantageously, the control means is adapted to return the infeed system to the operational state from the relief state in response to the overload cut-out means being determined as being in the engaged state.

In another embodiment of the invention the control means is adapted to determine the overload cut-out means operating in the engaged state in response to the signal indicative of the characteristic of the power being transmitted from the overload cut-out means reaching a predefined value.

In one embodiment of the invention the pressing means comprises at least one pressure inducing hydraulic ram for applying the pressure to the material therein, and the control means is configured to reduce pressure of hydraulic fluid applied to the at least one pressure inducing ram to reduce the pressure applied to the material in the pressing means.

In another embodiment of the invention the pressing means comprises at least two parts which together define a bale chamber in which the bale is rotated, pressed and formed, at least one of the parts being moveable relative to the other part from a closed state defining the bale chamber to an open state for accommodating discharge of a bale from the bale chamber, and the control means is adapted to control the pressure applied to the material in the bale chamber by controlling the pressure applied to one of the parts for retaining the parts in the closed state.

Preferably, the pressing means comprises at least two parts, which together define a bale chamber in which the bale is rotated, pressed and formed, at least one of the parts being moveable relative to the other one of the parts from a closed state defining the bale chamber to an open state for accommodating discharge of a bale from the bale chamber, and the at least one pressure inducing hydraulic ram cooperates with the moveable part for applying pressure to the crop material in the pressing means.

In another embodiment of the invention the control means is adapted to reduce the pressure being applied to the one of the parts of the pressing means to reduce the pressure applied to the material in the bale chamber.

Preferably, the pressure is applied to the moveable part of the pressing means.

In another embodiment of the invention the control means is adapted for moving the movable one of the parts of the pressing means a predefined distance from the closed state to reduce the pressure applied by the pressing means to the material therein.

In another embodiment of the invention the moveable part of the pressing means defines approximately 180° of the circumferential periphery of the bale chamber.

In another embodiment of the invention the moveable part of the pressing means is pivotally coupled to the other part of the pressing means about a main pivot axis extending parallel to a central longitudinal axis defined by the bale chamber, and preferably, the moveable part of the pressing means is pivotally coupled to the other part thereof about the main pivot axis adjacent one end of the moveable part.

Preferably, the control means is adapted for controlling the pivoting of the moveable part of the pressing means through a predefined angular displacement about the main pivot axis from the closed state thereof to reduce the pressure applied to the material in the bale chamber, and preferably, the control means is adapted to control pivoting of the moveable part about the main pivot axis from the closed state thereof through a predefined angular displacement in the range of 0.1° to 5°, and advantageously, a predefined angular displacement in the range of 1 ° to 3.5°, and ideally, through a predefined angular displacement of approximately 2° to reduce the pressure applied by the pressing means to the material therein.

In one embodiment of the invention the bale chamber is defined by a plurality of bale rotating rollers arranged to define the circumferential periphery of the bale chamber, some of the bale rotating rollers being rotatably located on the moveable part of the pressing means and others of the bale rotating rollers being located on the other or other parts of the pressing means.

In one embodiment of the invention the pressing means comprises at least one belt defining a bale chamber and configured to rotate and press the material in the bale chamber, the at least one belt being tensioned by the at least one pressure inducing ram for applying pressure to the material in the bale chamber.

In another embodiment of the invention the baler comprises a belt baler, and preferably, the pressing means comprises at least one belt for pressing and rotating the material in the pressing means, and preferably, the pressing means comprises a plurality of belts arranged side-by-side. Advantageously, the one or more belts are guided on a plurality of rotatably mounted rollers, some of which are fixed position rollers, and at least one of the other rollers comprises a tensioning roller for applying tension to the one or more belts for in turn applying pressure to the material in the pressing means.

Advantageously, the control means is adapted to control the tension applied to the one or more belts by the tensioning roller.

In another embodiment of the invention the infeed system is operable by the control means in response to a blockage in the infeed system from an operational state for urging material into the pressing means, to a relief state for at least partly relieving the blockage.

Preferably, the control means is configured to output signals to a towing vehicle towing the baler in response to a blockage occurring in the infeed system, the signals being convertible to human sensory perceptible signals indicative of a request to deactivate power being transmitted by the towing vehicle to the baler, and subsequently to reactivate the power being transmitted from the towing vehicle to the baler.

The advantages of the invention are many. A particularly important advantage of the invention is that the restarting of the baler after a blockage has occurred in the infeed system of the baler can be carried out with minimum loss of time. By reducing the pressure being applied by the pressing means to the bale therein while the blockage is being cleared, the power drawn to rotate the bale in the pressing means is considerably reduced, thereby the power available to the infeed system for clearing the blockage is considerably increased. This in turn enables a blockage in the infeed system to be cleared quickly and without difficulty on restarting the baler. In general, it has been found that the blockage in the infeed system is cleared on the first restart of the baler.

A further advantage of reducing the pressure applied by the pressing means to the bale therein is that the baler may be restarted more easily, and this is a particular advantage when the bale in the pressing means is of size greater than 90% of its full size by volume. An additional advantage of the invention is that by reducing the pressure applied by the pressing means to the bale therein during clearing of a blockage in the infeed system, wear and tear on the drive components of the baler is significantly reduced during restarting the baler to clear the blockage.

The invention will be more clearly understood from the following description of some preferred embodiments thereof which are given by way of example only with reference to the accompanying drawings, in which:
Fig. 1 is a perspective view of a combined baler/bale wrapper according to the invention,
Fig. 2 is a perspective view of the baler/bale wrapper of Fig. 1 in a different state to that of Fig. 1,
Fig. 3 is a partly cut-away perspective view of the baler/bale wrapper of Fig. 1,
Fig. 4 is a cross-sectional side elevational view of a portion of the baler/bale wrapper of Fig. 1,
Fig. 5 is a diagrammatic side elevational view of a portion of the baler/bale wrapper of Fig. 1,
Fig. 6 is a diagrammatic side elevational view of the portion of Fig. 5 illustrating a part of the portion of Fig. 5 in a different state to that of Fig. 1,
Fig. 7 is a side elevational view of a detail of the baler/bale wrapper of Fig. 1,
Fig. 8 is a diagrammatic side elevational view of a portion of the baler/bale wrapper of Fig. 1,
Fig. 9 is a view similar to Fig. 8 of the portion of Fig. 8 of the baler/bale wrapper of Fig. 1 illustrating the portion of Fig. 8 in a different state to that of Fig. 8,
Fig. 10 is a block representation of a part of a control circuit of the baler/bale wrapper of Fig. 1,
Fig. 11 is a side elevational view of a baler according to another embodiment of the invention,
Fig. 12 is a cross-sectional side elevational view of the baler of Fig. 11, and
Fig. 13 is a block representation of a part of a control circuit of the baler of Fig. 11.

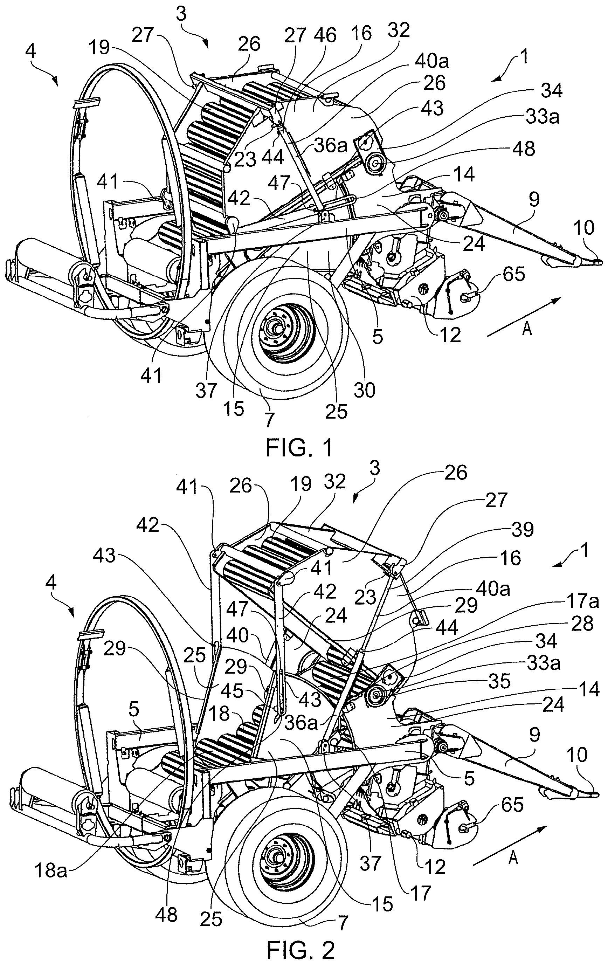

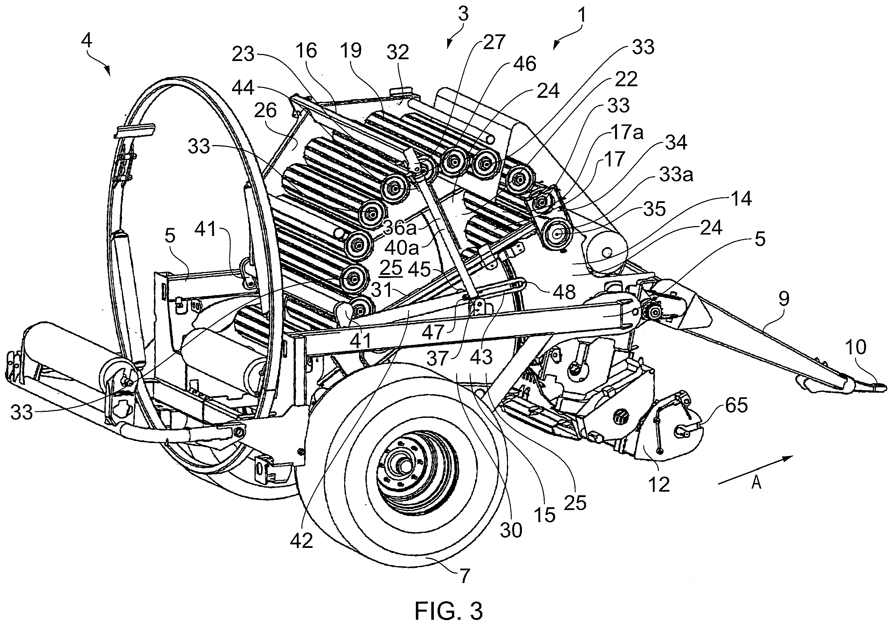

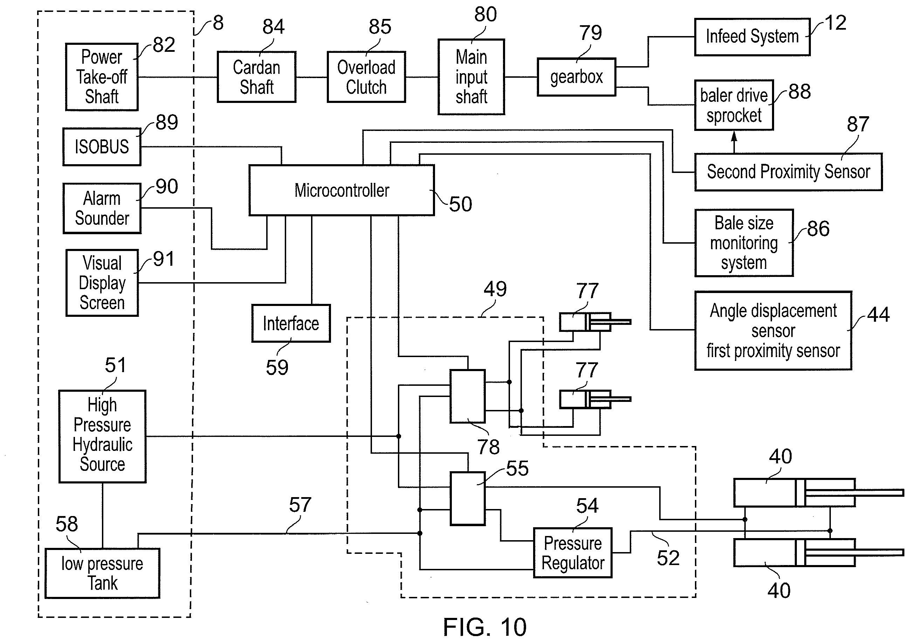

Referring to the drawings and initially to Figs. 1 to 10 thereof, there is illustrated a combined baler/bale wrapper according to the invention indicated generally by the reference numeral 1 for forming and wrapping a cylindrical bale of crop material, namely, a round bale. The combined baler/bale wrapper 1 comprises a baler 3 and a bale wrapper 4 mounted on a chassis 5 supported on a pair of rotatably mounted ground engaging wheels 7. A towing shaft 9 extends forwardly from the chassis and terminates in a coupling mechanism 10 for coupling the combined baler/bale wrapper 1 to a towing vehicle, typically, a tractor 8 illustrated in block representation only in Fig. 10. An infeed system 12 extends forwardly and downwardly from the chassis 5 for picking up crop material from an elongated sward thereof lying in a field as the baler/bale wrapper 1 is being towed forwardly in the direction of the arrow A by the towing vehicle along the sward of crop material. The infeed system 12 feeds the picked-up crop material into the baler 3. The combined baler/bale wrapper 1 is substantially similar to the combined baler/bale wrapper disclosed in PCT Published Patent Application Specification No. WO 2002/076183, and only those parts of the baler/bale wrapper 1 which are relevant to the invention will be described in detail, namely, the baler 3 and the infeed system 12.

The baler 3 in this embodiment of the invention comprises a fixed chamber baler having a three part pressing means comprising a fixed segment 14, a tipping segment 15 and a closure segment 16, which rotatably carry a plurality of bale rotating rollers 17,18 and 19, arranged in the three segments 14, 15 and 16, respectively, to define an outer circumferential periphery 20 of a bale chamber 22 within which crop material is rotated, pressed and formed into a round bale by the bale rotating rollers 17, 18 and 19.

The fixed segment 14 comprises a pair of spaced apart fixed side walls 24 secured to the chassis 5 which rotatably carry the bale rotating rollers 17. The tipping segment 15 comprises a pair of spaced apart side walls 25 which rotatably carry the bale rotating rollers 18. The closure segment 16 comprises a pair of spaced apart side walls 26 which carry the remaining bale rotating rollers 19. The bale rotating rollers 17 and 18 which are carried by the fixed segment 14 and the tipping segment 15 define approximately 180° of the circumferential periphery 20 of the bale chamber 22. The bale rotating rollers 19 of the closure segment 16 define the remaining approximately 180° of the circumferential periphery 20 of the bale chamber 22.

The bale rotating rollers 17 and 18 of the fixed segment 14 and the tipping segment 15 together with the fixed side walls 24 and the side walls 25 of the fixed and tipping segments 14 and 15, respectively, together define a lower half 30 of the bale chamber 22. Upper side edges 28 of the fixed side walls 24 of the fixed segment 14, and upper edges 29 of the side walls 25 of the tipping segment 25 together with the bale rotating rollers 17a and 18a of the fixed segment 14 and the tipping segment 15 define an open mouth 31 to the lower half 30 of the bale chamber 22 for accommodating a formed bale from the bale chamber 22. The bale rotating rollers 19 of the closure segment 16 together with the side walls 26 thereof define an upper half 32 of the bale chamber 22.

The bale rotating rollers 17, 18 and 19 are mounted fast on respective roller carrying shafts 33, which are rotatably carried in the side walls 24, 25 and 26, respectively, in bearings (not shown). Sprockets (not shown) mounted fast on the roller carrying shafts 33 are driven by chains (also not shown) for rotating the bale rotating rollers 17, 18 and 19 of the three segments 14, 15 and 16, respectively, as will be understood by those skilled in the art, for in turn rotating a bale in the bale chamber 22.

The closure segment 16 is pivotally coupled to the fixed segment 14 by a pair of pivot mounting brackets 34 extending from the respective side walls 26 of the closure segment 16. The pivot mounting brackets 34 pivotally engage a main pivot shaft, which in this case is provided by the roller carrying shaft 33a of the bale rotating roller 17a of the fixed segment 14. The roller carrying shaft 33a defines a main pivot axis 35, about which the closure segment 16 is pivotal, from a bale forming closed state illustrated in Figs. 1, 3 and 4, defining with the fixed segment 14 and the tipping segment 15 the bale chamber 22, to an open state illustrated in Fig. 2 for accommodating a formed bale from the bale chamber 22.

The tipping segment 15 is pivotally coupled to the chassis 5 about a secondary pivot shaft, which in this case is provided by the roller carrying shaft 33b of the bale rotating roller 18a of the tipping segment 15. A pair of mounting brackets (not shown) rigidly secured to the chassis 5 rotatably and pivotally carry the roller carrying shaft 33b of the bale rotating roller 18a adjacent the respective opposite ends thereof for pivotally coupling the tipping segment 15 relative to the chassis 5. The roller carrying shaft 33b defines a secondary pivot axis 38 about which the tipping segment 15 is pivotal from a bale forming state illustrated in Figs. 1, 3 and 4 cooperating with the fixed and closure segments 14 and 16 to form the bale chamber 22, to a tipping state illustrated in Fig. 2 for tipping a formed bale from the bale chamber 22 onto the bale wrapper 4 for two axis wrapping thereof with plastic film material.

At least one pressure inducing hydraulic ram, in this case a pair of main double-acting hydraulic rams 40 acting between and pivotally coupled to the chassis 5 and the closure segment 16 on respective opposite sides thereof apply a pressure to the closure segment for in turn, applying a pressure to the crop material in the bale chamber 22 in order to produce the bale to a predefined bale density, which in this case is a selectable bale density, as will be described below. The main rams 40 also operate the closure segment 16 between the open state and the closed state. Each main ram 40 comprises a cylinder 36 pivotally coupled to the chassis 5 by a corresponding first pivot mounting 37. A piston rod 39 extending from the cylinder 36 of each main ram 40 is pivotally coupled to the closure segment 16 by a corresponding second pivot mounting 27 located on the adjacent side wall 26 of the closure segment 16.

A pair of link members 42 pivotally coupled to the closure segment 16 and slideably coupled to the tipping segment 15 operate the tipping segment 15 from the bale forming state to the tipping state for tipping a formed bale from the bale chamber 22 onto the bale wrapper 4 as the main rams 40 are urging the closure segment 16 from the closed state to the open state. The link members 42 are pivotally coupled to the closure segment 16 on respective opposite sides thereof by respective pivot mounting brackets 41. A longitudinally extending elongated delay slot 43 extends longitudinally in each link member 42 from an inner end 47 to an outer end 48 for slideably and pivotally engaging a corresponding engagement pin 45 extending outwardly from the adjacent side wall 25 of the tipping segment 15. The slideable engagement of the engagement pins 45 in the delay slots 43 of the link members 42 provides an initial delay to delay the commencement of tipping of the tipping segment 15 from the bale forming state until after the commencement of pivoting of the closure segment 16 from the closed state to the open state.

In the closed state of the closure element 16, the engagement pins 45 engage the corresponding delay slots 43 in the link members 42 adjacent inner ends 47 thereof. As the closure element 16 is being urged from the closed state to the open state, the engagement pins 45 initially slide along the delay slots 43 from the inner ends 47 thereof to the outer ends 48 with the tipping segment 15 remaining in the bale forming state. On the engagement pins 45 engaging the outer ends 48 of the delay slots 43, further movement of the closure segment 16 to the open state thereof results in the tipping segment 15 being urged from the bale forming state to the tipping state for discharging a formed bale thereon onto the bale wrapper 4. Accordingly, by the time the tipping segment 15 commences to move from the bale forming state towards the tipping state, the closure segment 16 will have moved sufficiently from the closed state towards the open state to provide sufficient head room to accommodate the tipping segment 15 with the formed bale thereon from the bale forming state to the tipping state.

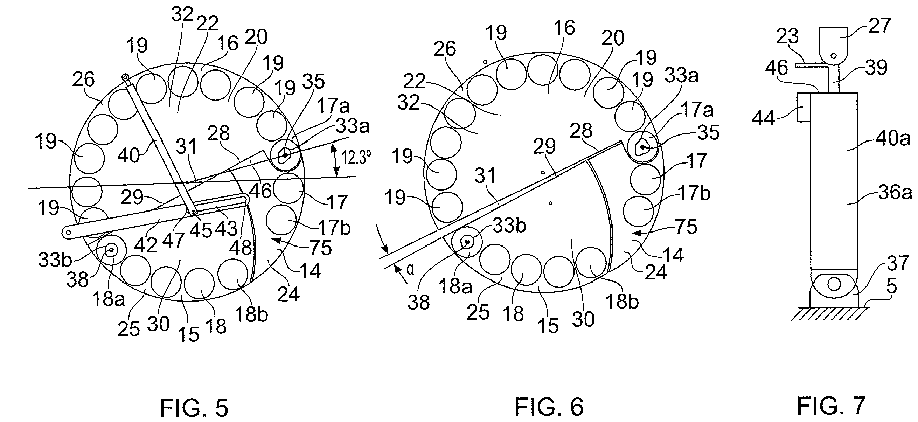

As mentioned above as well as operating the closure segment 16 from the closed state to the open state, the main rams 40 are operated to apply the selectable pressure to the closure segment 16, for retaining the closure segment 16 in the closed state, and for applying pressure to the crop material being rotated in the bale chamber 22 as the formation of the bale in the bale chamber 22 is nearing completion, so that the bale is formed and pressed to the selectable bale density. As the formation of the bale in the bale chamber 22 is nearing completion, and in general, when the size of the bale by volume has exceeded approximately 90% of its full size by volume, the radial outward pressure being applied by the rotating bale in the bale chamber 22 begins to exceed the pressure being applied to the bale by the main rams 40 through the closure segment 16, and the closure segment 16 begins to be displaced angularly about the main pivot axis 35 from the closed state through an angle a, see Fig. 6.

A bale completion monitoring means is provided for monitoring the angular displacement of of the closure segment 16 from the closed state to determine when the bale has been formed to its full volume size of the selectable bale density as will be understood by those skilled in the art. Any suitable bale completion monitoring means for monitoring the angular displacement of of the closure segment 16 from the closed state may be provided. In this embodiment of the invention the bale completion monitoring means comprises a first inductive proximity sensor 44 mounted on the cylinder 36 adjacent a distal end 46 thereof of one of the main rams 40, in this case the cylinder 36a of the main ram 40a. The first proximity sensor 44 is configured to monitor the spacing between the distal end 46 of the cylinder 36a and a target plate 23 mounted rigidly on the second pivot mounting 27 pivotally mounting the piston rod 39 of the corresponding main ram 40a to the closure segment 16. The first proximity sensor 44 produces a signal indicative of the spacing between the distal end 46 of the cylinder 36a and the target plate 23, which is proportional to the angular displacement of of the closure segment 16 from the closed state thereof.

The operation of the main rams 40 for operating the closure segment 16 between the closed and open states and for controlling the density to which the bale is formed in the bale chamber 22 is controlled by a hydraulic control circuit 49 under the control of a control means, which in this embodiment of the invention comprises a microcontroller 50. Pressurised hydraulic fluid for the hydraulic system of the baler/bale wrapper 1 is derived from a high pressure hydraulic fluid source 51 of the hydraulic system of the tractor 8 towing the baler 3. High pressure hydraulic fluid from the high pressure hydraulic source 51 of the tractor 8 is applied to the main rams 40 through a first hydraulic spool valve 55. Return hydraulic fluid from the main rams 40 is returned through the first hydraulic spool valve 55 and a low pressure line 57 to a low pressure tank 58 of the high pressure hydraulic fluid source 51. The first hydraulic spool valve 55 is operated under the control of the microcontroller 50 for selectively switching the high pressure hydraulic fluid to the main rams 40 and the hydraulic fluid returned from the main rams 40 between the two ports of each main ram 40, for in turn operating the main rams 40 to operate the closure segment between the open and closed states.

A pressure regulator 54 operated under the control of the microcontroller 50 is located in a line 52 between the first hydraulic spool valve 55 and the main rams 40 for controlling the pressure of the hydraulic fluid applied to the main rams 40 for urging the closure segment 16 into the closed state and for maintaining the closure segment 16 in the closed state to apply a selectable pressure to the rotating bale in the bale chamber 22 as the formation of the bale is nearing completion, so that the bale is formed to a selectable bale density. In this embodiment of the invention the bale density to which the bale is formed is selected by selecting the pressure at which the hydraulic fluid in the line 52 is applied to the main rams 40 by the pressure regulator 54. The microcontroller 50 controls the pressure regulator 54 to maintain the pressurised hydraulic fluid in the line 52 applied to the main rams 40 at a selected hydraulic pressure, which is referred to as the density pressure of the hydraulic fluid for producing the bale to a corresponding bale density. The pressure which is applied by the main rams 40 to the closure segment 16 in order to produce the formed bale to the selected bale density is determined by the selected density pressure at which the pressurised hydraulic fluid is maintained in the line 52 and applied to the main rams 40 for urging the closure segment 16 into the closed state.

Low pressure hydraulic fluid from the pressure regulator 54 is returned to the low pressure tank 58 of the high pressure hydraulic fluid source 51 through the low pressure line 57 when the pressure regulator is operated under the control of the microcontroller 50 to reduce the pressure of the hydraulic fluid in the line 52, as will be described below.

An interface 59, which may be touchscreen interface, a keypad interface, or any other suitable interface, is provided on the baler 3 for inputting data and commands to the microcontroller 50, including the selected density pressure at which the pressure regulator 54 is to regulate the pressure of the hydraulic fluid being applied to the main hydraulic rams 40 through the line 52 to produce the bale of the selected bale density.

Turning now to the infeed system 12, the infeed system 12 comprises an infeed platform 60 extending from an upstream end 61 to a downstream end 62 pivotally mounted on the chassis 5 about a pivot axis 64. A rotatably mounted driven pick-up rotor 65 having radially extending tines 66 is rotatably mounted adjacent the upstream end 61 of the infeed platform 60 for picking up crop material from an elongated sward thereof lying in a field and for transferring the picked-up crop material onto the infeed platform 60 adjacent the upstream end 61 thereof. A secondary ground engaging wheel 67 also located adjacent the upstream end 61 of the infeed platform 60 sets the level of the pick-up rotor 61 above the field.

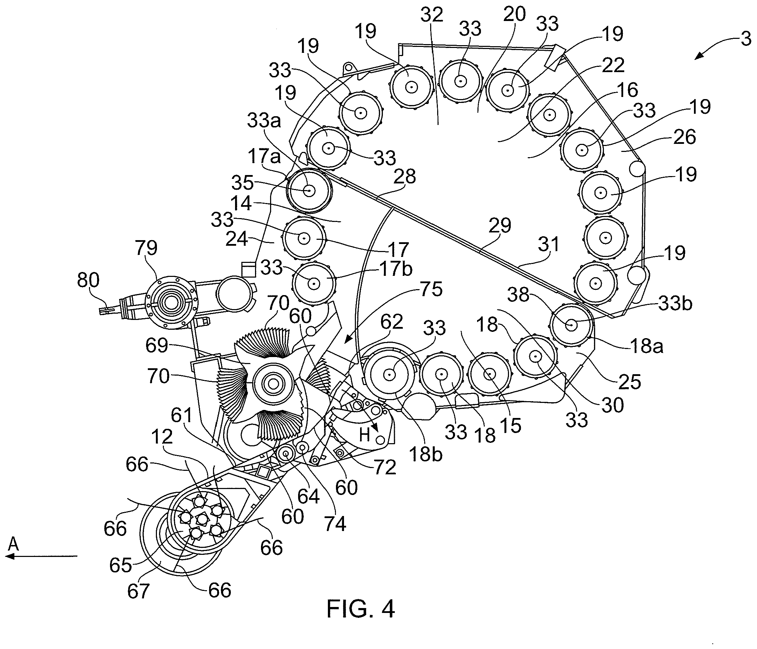

A driven chopping rotor 69 comprising a plurality of chopping blades 70 extending radially therefrom is rotatably mounted above the infeed platform 60 and cooperates with corresponding stationary blades 72 located beneath the infeed platform, which extend through corresponding longitudinally extending slots (not shown) in the infeed platform 60 for chopping the crop material into relatively short lengths. The stationary blades 72 are pivotally carried on a pivot shaft 74 and are pivotal between an inoperative state (not shown) located below the infeed platform 60 and an operative state, illustrated in Fig. 4, extending through the slots (not shown) in the infeed platform 60 for cooperating with the chopping blades 70 of the chopping rotor 69 to chop the crop material. In both the operative and the inoperative states of the stationary blades 72, the chopping rotor 69 also acts to urge the crop material along the infeed platform 60 to the downstream end 62, and in turn into the bale chamber 22 of the baler 3 through a gap 75 defined between the bale rotating rollers 17b and 18b of the fixed and tipping segments 14 and 15, respectively. This aspect of the operation of the infeed system 12 for feeding crop material into the bale chamber 22 will be known to those skilled in the art.

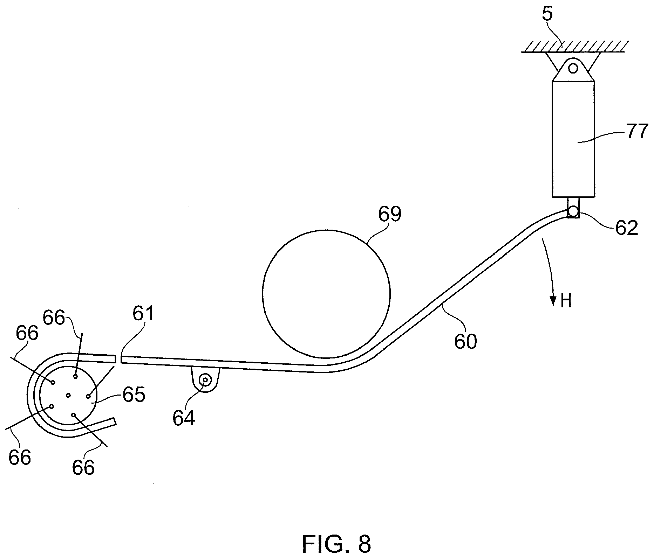

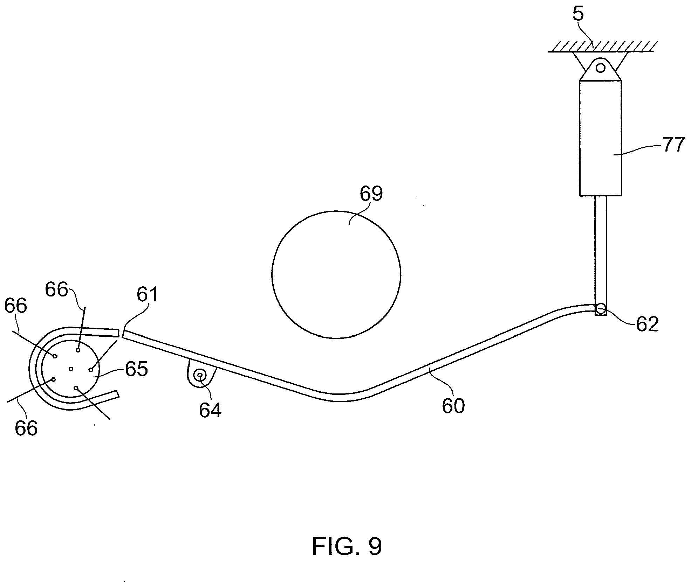

The infeed platform 60 is pivotal downwardly in the direction of the arrow H about the pivot axis 64 from an operational state illustrated in Figs. 4 and 8 for feeding the crop material into the bale chamber 22, to a relief state illustrated in Fig. 9 with the infeed platform 60 lowered relative to the chopping rotor 69 to relieve a blockage resulting from an agglomeration of crop material in the infeed system in the event of such a blockage occurring. A pair of secondary double acting hydraulic rams 77 is provided for pivoting the infeed platform 60 about the pivot axis 64 between the operational state and the relief state. The secondary rams 77 act between the chassis 5 and the downstream end 62 of the infeed platform 60 on respective opposite sides thereof and their operation is controlled by a second hydraulic spool valve 78 in the hydraulic control circuit 49 under the control of the microcontroller 50.

A gearbox 79 mounted on the chassis 5 receives drive delivered to a main input shaft 80 from a power take-off shaft 82 of the tractor 8 towing the baler/bale wrapper 1, see Figs. 4 and 10, and distributes power to the bale rotating rollers 17, 18 and 19, the infeed system 12, including the pick-up rotor 65 and the chopping rotor 69. A Cardan shaft 84, illustrated only in Fig. 10 in block representation, transmits drive from the power take-off shaft 82 of the tractor 8 to the main input shaft 80 through an overload cut-out means, which in this embodiment of the invention comprises an overload clutch 85, illustrated only in Fig. 10 in block representation.

The overload clutch 85 is operable between an engaged state to transmit drive from the main input shaft 80 to the gearbox 79, and a disengaged state preventing the transmission of drive therethrough to the gearbox 79. The overload clutch 85 is configured to transition from the engaged state to the disengaged state in the event of an overload condition occurring in the baler/bale wrapper 1, which in general, would result from a blockage occurring in the infeed system 12. The overload clutch 85 is resettable automatically into the engaged state by deactivating drive to the overload clutch 85 and reactivating the drive thereto.

Referring now in particular to Fig. 10, the microcontroller 50, as well as controlling the operation of the baler/bale wrapper 1, reads signals from a bale size monitoring system 86 in the baler 3 for monitoring the size of the bale in the bale chamber 22. Any suitable monitoring system for monitoring the size of the bale in the bale chamber 22 may be used. Such bale size monitoring systems will be known to those skilled in the art. The microcontroller 50 also reads signals from a power monitoring means for monitoring a characteristic indicative of the power being drawn by the baler 3 through the overload clutch 85. In this embodiment of the invention the power monitoring means for monitoring the characteristic indicative of the power being drawn by the baler 3 through the overload clutch 85 comprises a second inductive proximity sensor 87 for monitoring the speed of rotation of any one of a number of drive or driven sprockets powered from the gearbox 79, and in this embodiment of the invention a sprocket 88, through which drive is transmitted from the gearbox 79 to the chains (not shown) which rotate the bale rotating rollers 17, 18 and 19. The signal produced by the second proximity sensor 87 is indicative of the rotational speed of the sprocket 88.

The microcontroller 50 also reads signals from an ISOBUS 89 of the CAN network of the tractor 8 which is indicative of a characteristic of power being applied to the power take-off shaft 82 of the tractor, which in this embodiment of the invention produces a signal indicative of the rotational speed of the power take-off shaft 82.

The microcontroller 50 is programmed to detect a blockage in the infeed system 12 by comparing the rotational speed of the power take-off shaft 82 read from the ISOBUS 89 with the rotational speed of the sprocket 88 read from the signal produced by the second proximity sensor 87. On detecting the absence of rotation of the sprocket 88 from the second proximity sensor 87 when the signal read from the ISOBUS 89 is indicative of the power take-off shaft 82 rotating, the microcontroller 50 determines the presence of blockage in the infeed system 12, since power is no longer being transmitted through the overload clutch 85, thereby indicating that the overload clutch 85 has transitioned from the engaged state into the disengaged state, and has disengaged drive to the main input shaft 80 of the gearbox 79.

On detecting the blockage in the infeed system 12, the microcontroller 50 transmits an alert signal, which activates an audible alarm sounder 90 in the cab of the tractor 8, indicating the presence of a blockage to the tractor driver, so that the tractor driver can stop the tractor and disengage the power take-off shaft 82 from the drive system of the tractor 8. A message indicating the presence of the blockage is also transmitted by the microcontroller 50 to a visual display screen 91 in the cab of the tractor 8, indicating that the tractor should stop and the power take-off shaft 82 should be disengaged from the drive system of the tractor 8, in order to reset the overload clutch 85. The microcontroller 50 then operates the second hydraulic spool valve 78 to operate the secondary rams 77 for operating the infeed platform 60 from the operational state to the relief state.

The microcontroller 50 determines the size of the bale in the bale chamber 22 from the signal read from the bale size monitoring system 86. If the bale has been formed to a predefined size, the microcontroller 50 is programmed to operate the pressure regulator 54 to reduce the pressure of the hydraulic fluid in the line 52 being applied to the main rams 40 by a predefined amount from the selected density pressure of the hydraulic fluid, for in turn reducing the pressure being applied to the bale in the bale chamber through the closure segment 16. The predefined size of the bale is selected such that a reduction in the pressure of the hydraulic fluid in the line 52 being applied to the main rams 40 below the selected density pressure of the hydraulic fluid would produce a reasonable reduction in the power being drawn by the baler 1 to drive the bale rotating rollers 17, 18 and 19 when the baler is being restarted, in order to increase the power available to the chopping rotor 69 to clear the blockage in the infeed system 12. In this embodiment of the invention the predefined size of the bale is selected to be a size of approximately 90% of the full volume of the bale when fully formed. Although, the predefined size may be selected to be a size less than 90% of the volume of the bale when fully formed, and in some embodiments of the invention the predefined size may be selected to be any size corresponding to a volume from 80% upwards of the full volume to which the bale is to be formed.

The predefined amount by which the pressure is to be reduced below the selected density pressure of the hydraulic fluid, may be any suitable pressure amount, which would produce a reasonable reduction in the power required to drive the bale rotating rollers 17, 18 and 19 during restarting of the baler, and in general, is dependent on the crop material being baled. In this embodiment of the invention when the crop material being baled is silage, the pressure regulator 54 is operated to reduce the pressure of the hydraulic fluid in the line 52 being applied to the main rams 40 to zero pressure, since the weight of the closure segment is sufficient, in general, to maintain the closure segment 60 in a state to maintain the baler operable on restarting of the baler 1 to clear the blockage. Although, in some embodiments of the invention it is envisaged that the pressure regulator 54 would be operated to reduce the pressure of the hydraulic fluid in the line 52 by 50% of the selected density pressure of the hydraulic fluid, and in some cases, up to 70% or 80% of the selected density pressure of the hydraulic fluid.

As the pressure regulator 54 is being operated to reduce the pressure of the hydraulic fluid in the line 52, the microcontroller 50 reads signals from the first proximity sensor 44 which are indicative of the angular displacement of of the closure segment 16 from the closed state. If the angular displacement *α* of the closure segment 16 from the closed state exceeds a predefined angular displacement value, in this embodiment of the invention of 4°, the pressure regulator 54 is operated under the control of the microcontroller 50 to cease reducing the pressure of the hydraulic fluid in the line 52, and to maintain the pressure of the hydraulic fluid in the line 52 in order to maintain the angular displacement of of the closure segment 16 from the closed state at the predefined angular displacement value not greater than 4°.

On the pressure of the hydraulic fluid in the line 52 being reduced by the predefined pressure amount, the microcontroller 50 outputs an activation signal to the alarm sounder 90 and to the visual display screen 91 in the cab of the tractor 8, instructing the driver of the tractor to reengage the power take-off shaft 82 with the drive system of the tractor 8, in order to reapply power to the overload clutch 85 to reset it into the engaged state and to operate the infeed system 12 and the bale rotating rollers 17, 18 and 19. With the power being drawn by the bale rotating rollers 17, 18 and 19 reduced, and the infeed system 12 operating with the infeed platform 60 in the relief state, the blockage in the infeed system 12 is quickly cleared.

The microcontroller 50 continues to monitor the speed of the power take-off shaft 82 from the ISOBUS 89, and the rotational speed of the sprocket 88. On the signals read from the second proximity sensor 87 being indicative of power being transmitted through the overload clutch 85 reaching a predefined power level, the microcontroller 50 determines that the blockage in the infeed system 12 has been cleared and the microcontroller 50 operates the secondary rams 77 to urge the infeed platform 60 from the relief state to the operational state, and operates the pressure regulator 54 to increase the pressure of the hydraulic fluid in the line 52 applied to the main rams 40 to the selected density pressure, so that the baler 3 is operated to complete the formation of the bale in the bale chamber 22 to the selected bale density. In this embodiment of the invention the power being transmitted through the overload clutch 85 is determined as having reached the predefined power level when the rotational speed of the sprocket 88 has reached a predefined proportional speed, which is a speed proportional to the rotational speed of the power take-off shaft.

On completion of the formation of the bale in the bale chamber 22, the main rams 40 are operated to operate the closure segment 16 from the closed state to the open state, which in turn operates the tipping segment 15 from the bale forming state to the tipping state for tipping the formed bale from the bale chamber 22 to the bale wrapper 4 where two axis wrapping of the bale with plastic film is carried out.

If on the other hand, the size of the bale in the bale chamber 22 during a blockage in the infeed system 12 is less than the predefined size, and reduction in the pressure of the hydraulic fluid in the line 52 would not have any significant effect on reducing the power being drawn by the bale rotating rollers 17, 18 and 19 on restarting of the baler to clear the blockage in the infeed system 12, the microcontroller 50 outputs the alert signal to the alarm sounder 90 and also outputs a signal to the visual display screen 91 of the tractor 8 containing a message advising the driver that the size of the bale in the bale chamber is less than the predefined size, and the microcontroller 50 operates the secondary rams 77 to urge the infeed platform 60 from the operational state to the relief state. If the driver wishes, he or she may operate the main rams 40 to urge the closure segment 16 through a small angular displacement of from the closed state to reduce the pressure being applied to the crop material in the bale chamber 22 by the closure segment 16. The driver then disengages and reengages the power take-off shaft 82 from and to the drive system of the tractor 8 to reengage the overload clutch 85 and to clear the blockage.

On the baler having been restarted, the microcontroller 50 reads the signals from the second proximity sensor 87 to determine when the rotational speed of the sprocket 88 is proportional to the rotational speed of the power take-off shaft 82 of the tractor 8, and on the rotational speed of the sprocket 88 being proportional to the rotational speed of the power take-off shaft 82 of the tractor 8 by a predefined proportion, the microcontroller 50 operates the second hydraulic spool valve 78 to operate the secondary ram 77 to return the infeed platform 60 to the operational state, and formation of the bale in the bale chamber continues.

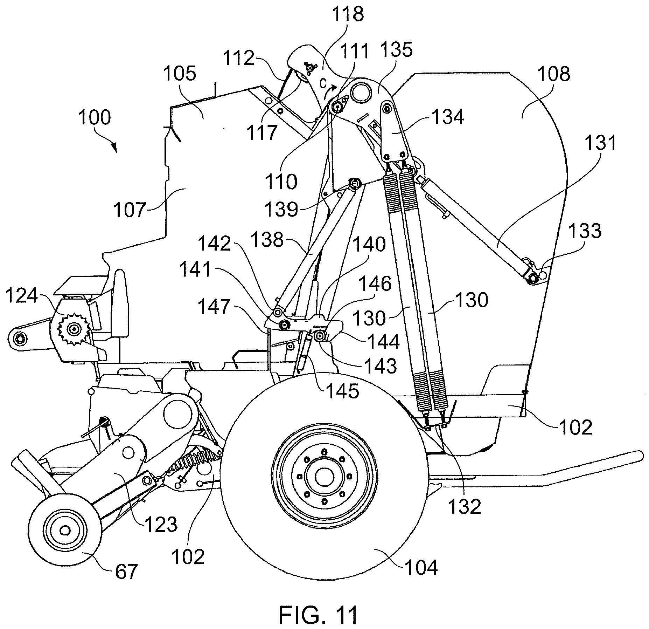

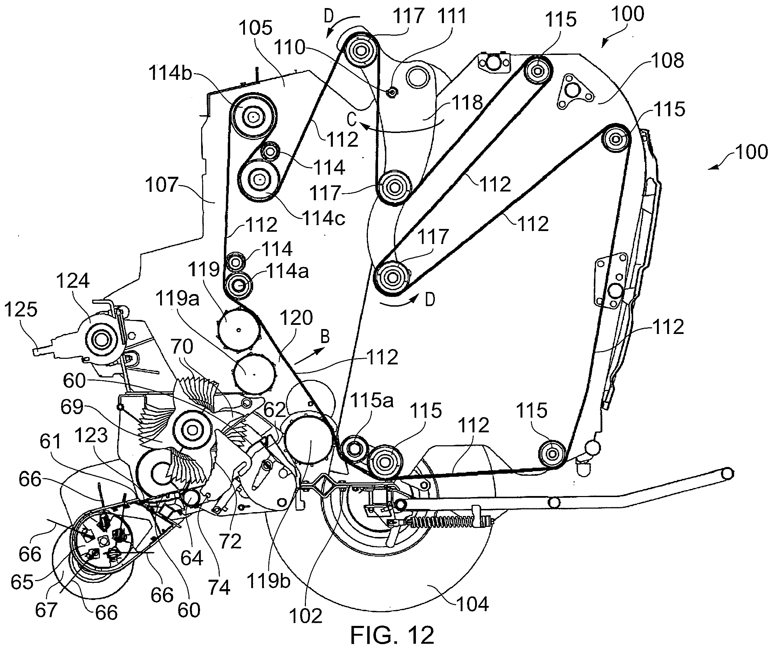

Referring now to Figs. 11 to 13 there is illustrated a baler according to another embodiment of the invention and indicated generally by the reference numeral 100 for forming a round bale of crop material. The baler 100 comprises a belt baler of the type which will be known to those skilled in the art. The baler 100 comprises a chassis 102 supported on a pair of rotatably mounted main ground engaging wheels 104. A housing 105 is mounted on the chassis 102 and comprises a fixed forward housing part 107 and a rearward housing part 108 pivotally coupled to the forward housing part 107 about an upper pivot axis 110 defined by a pivot shaft 111 pivotally mounted in the forward housing part 107, and about which the rearward housing part 108 is pivotal. The rearward housing part 108 is pivotal about the pivot shaft 111 from a closed state illustrated in Figs. 11 and 12 to an open state (not shown), but will be understood by those skilled in the art, for discharging a formed bale from the baler 100.

A pressing means for rotating, pressing and forming a bale comprises a plurality of belts 112, only one of which can be seen in Fig. 12, located side-by-side, and guided around a plurality of rollers. Five of the rollers, namely, the rollers 114 are fixed position rollers and are rotatably mounted in the forward housing part 107. Five of the rollers, namely, the rollers 115 are also fixed position rollers and are rotatably mounted in the rearward housing part 108, and are fixed in position in the rearward housing part 108, and are also fixed in position relative to the forward housing part 107 when the rearward housing part 108 is in the closed state during formation of a bale in the baler 100. Three of the rollers, namely, the rollers 117 are tensioning rollers and are rotatably mounted on a pair of spaced apart tensioning arms 118. The tensioning arms 118 are rigidly secured to the pivot shaft 111 and are pivotal with the pivot shaft 111 about the upper pivot axis 110 for tensioning the belts 112 as the bale is being formed. Three bale rotating rollers 119 are rotatably mounted in the forward housing part 107 and define with the belts 112 a variable size bale chamber 120, which increases in size as the bale is being formed, with the portion of the belt extending between the fixed position rollers 114a and 115a extending into the housing 105 in the direction of the arrow B. Two of the rollers 114, namely, the rollers 114b and 114c are driven rollers for driving the belts 112 about the rollers 114, 115 and 117, for in turn rotating the crop material in the bale chamber 120 for forming the bale therein.

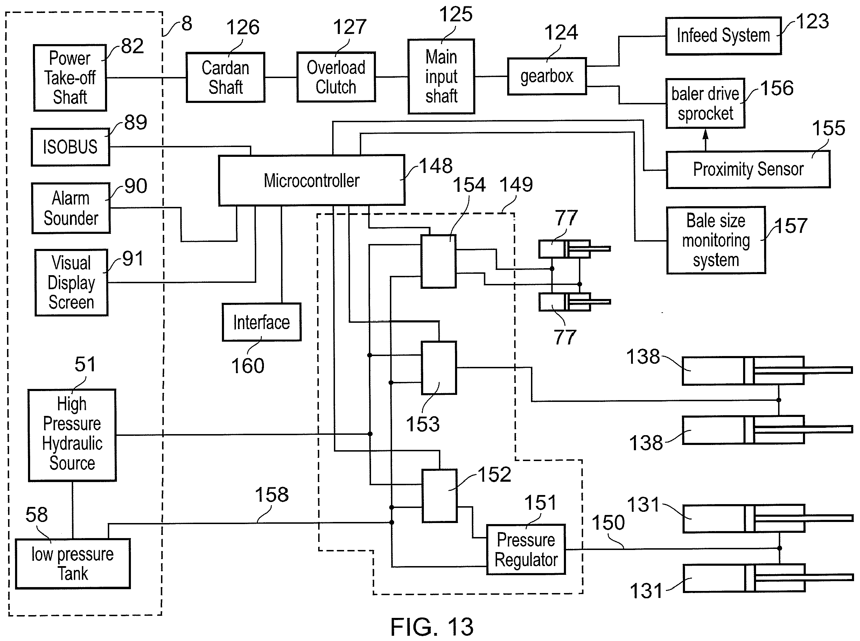

An infeed system 123 mounted on the chassis 102 and extending forwardly downwardly therefrom, picks up crop material from an elongated sward thereof lying in a field, as the baler 100 is being towed by a towing vehicle such as the tractor 8 described with reference to the baler/bale wrapper 1, along the sward of crop material, and feeds the picked-up crop material into the bale chamber 120 between the bale rotating rollers 119a and 119b into the bale chamber 120. The infeed system 123 is similar to the infeed system 12 of the baler/bale wrapper 1, and similar components are identified by the same reference numerals. The tractor 8 is illustrated in Fig. 13, and since it is similar to the tractor 8 described with reference to the baler/bale wrapper 1, similar components are identified by the same reference numerals.

A gearbox 124 mounted on the chassis 102 receives power from a main input shaft 125 through a Cardan shaft 126 and an overload clutch 127, see Fig. 13, in a similar manner as power is transmitted from the power take-off shaft 82 of the tractor 8 through the Cardan shaft 84 and the overload clutch 85 to the main input shaft 80 of the gearbox 79 of the baler/bale wrapper 1. The overload clutch 127 is similar to the overload clutch 85. Drive is transmitted from the gearbox 124 to the infeed system 123 and to the bale rotating rollers 119, as well as to the driven rollers 114b and 114c.

A tensioning means for inducing tension into the belts 112 comprises two pairs of tension springs 130 and a pair of pressure inducting hydraulic rams for inducing tension in the belts 112, in this case a pair of single acting hydraulic tensioning rams 131 located on respective opposite sides of the housing 105. The two pairs of tension springs 130 are provided for initially tensioning the belts 112 during the initial stage of the formation of the bale in the bale chamber 120. The tensioning rams 131 tension the belts 112 thereafter. The tension induced in the belts 112 by the tensioning rams 131 is set, as will be described below, so that the pressure applied by the belts 112 to the crop material in the bale chamber is a pressure to produce the bale to a selectable bale density. In general, the tension springs 130 provide the tension in the belts 112 until the bale has been formed up to approximately 20% to 25% of its final size by volume, and thereafter the belts are tensioned by the tensioning rams 131.

A pair of lever arms 135 are mounted fast on and extend radially from the pivot shaft 110 adjacent respective opposite ends thereof. Each tensioning ram 131 acts between a pivot mounting bracket 133 secured to the rearward housing part 108 on an adjacent side thereof and a corresponding one of the lever arms 135 for biasing the tensioning arms 118 in the direction of the arrow C around the upper pivot axis 111 for inducing tension in the belts 112. Thus, as the diameter of the bale in the bale chamber 120 commences to increase, the bale of increasing diameter results in the tensioning arms 118 being urged in the direction of the arrow D around the upper pivot axis 110 against the biasing pressure being applied to the tensioning arms 118 in the direction of the arrow C by the tensioning rams 131. Thus, the tensioning rams 131 maintain the tension in the belts 112 as the diameter of the bale is increasing. The tension induced in the belts 112 is set and is selectable by setting the density pressure of the hydraulic fluid applied to the tensioning rams 131 at a selectable density pressure to produce the formed bale to a selected bale density.

The tension springs 130 of each pair thereof are anchored to a corresponding anchor bracket 132 on the adjacent side of the rearward housing part 108, and are secured to a coupling bracket 134 pivotally coupled to a corresponding one of the lever arms 135. The tension springs 130 acting on the lever arms 135 through the coupling brackets 134 also urge the tensioning arms 118 in the direction of the arrow C about the pivot axis 112 for inducing the initial tension in the belts 112.

A pair of single acting hydraulic latching rams 138 located on respective opposite sides of the housing 105 retain the rearward housing part 108 in the closed state against the pressure acting on the bale by the tensioned belts 112 during the formation of the bale in the bale chamber 120. The latching rams 138 act between the rearward housing part 108 and the forward housing part 107, and in acting on the forward housing part 107 act through respective latches 140. Each latching ram 138 is pivotally coupled at 139 to a corresponding side of the rearward housing part 108, and is pivotally coupled to the corresponding latch 140 at 142. Each latch 140 is pivotally coupled to a corresponding side of the forward housing part 107 on a corresponding pivot pin 141 about which the latch 140 is pivotal between a latched state illustrated in Fig. 11 for engaging and latching a corresponding latch pin 143 on the rearward housing part 108 for retaining the rearward housing part 108 in the closed state and an unlatched state (not shown) disengaged from the latch pin 143. A tension spring 145 acting between the forward housing part 107 and the corresponding latch 140 biases the latch 140 downwardly into the latched state. An angled lead-in 144 on each latch 140 engages the corresponding latch pin 143 for guiding the latch pin 143 into a latching recess 146 of the latch 140 as the rearward housing part 108 is being urged into the closed state.

The rearward housing part 108 is urged into the open state about the upper pivot axis 110 by the latching rams 138. On initial extension of the latching rams 138, the latches 140 are urged by the latching rams 138 from the latched state to an unlatched state for disengaging the latch pins 143 of the rearward housing part 108. Once the latches 140 have been urged into the unlatched state, further pivoting of the latches 140 beyond the unlatched state is prevented by respective stop members 147 mounted on the forward housing part 107, so that further extension of the latching rams 138 urges the rearward housing part 108 into the open state for discharging the bale from the bale chamber 120. The operation of the rearward housing part 108 from the closed state to the open state for discharging a bale from the bale forming chamber 120 will be understood by those skilled in the art.

Referring now to Fig. 13 the baler 100 comprises a control means provided by a microcontroller 148 which controls the operation of the baler 100. The tensioning rams 131, the latching rams 138 and the secondary rams 77 of the infeed system 123 are operated under the control of a hydraulic control circuit 149, which in turn is operated under the control of the microcontroller 148. As in the case of the combined baler/bale wrapper 1, the pressurised hydraulic fluid to operate the tensioning rams 131, the latching rams 138 and the secondary rams 77 is derived from the high pressure hydraulic fluid source 51 of the hydraulic system of the tractor 8.

A first hydraulic spool valve 152 in the hydraulic control circuit 149 operating under the control of the microcontroller 148 is connected to the tensioning rams 131 through a line 150, and controls the supply of pressurised hydraulic fluid from the high pressure hydraulic fluid source 51 of the tractor 8 to the tensioning rams 131, and the return hydraulic fluid from the tensioning rams 131 to the low pressure tank 58 of the high pressure hydraulic fluid source 51 for operating the tensioning rams 131. The first hydraulic spool valve 152 is connected to the low pressure tank 58 through a line 158. A second hydraulic spool valve 153 in the hydraulic control circuit 149 operated under the control of the microcontroller 148 controls the supply of pressurised hydraulic fluid to the latching rams 138 and the return of hydraulic fluid from the latching rams 138 to the low pressure tank 58 of the high pressure hydraulic fluid source 51 of the tractor 8 for operating the latching rams 138. A third hydraulic spool valve 154 in the hydraulic control circuit 149 under the control of the microcontroller 148 controls the supply of pressurised hydraulic fluid to the secondary rams 77 and the return of hydraulic fluid from the secondary rams 77 to the low pressure tank 58 of the high pressure hydraulic fluid source 51 of the tractor 8 for in turn operating the infeed platform 60 between the operational state and the relief state.

A pressure regulator 151 located in the line 150 operated under the control of the microcontroller 148 controls the pressure of the hydraulic fluid applied to the tensioning rams 131 at a selectable density pressure, so that the pressure applied to the crop material in the bale chamber 120 by the belts 112 is maintained at a pressure which will produce the bale to a selected bale density. Low pressure hydraulic fluid is returned from the pressure regulator 151 to the low pressure tank 58 of the high pressure hydraulic fluid source 51 of the tractor 8 when the pressure regulator 151 is reducing the pressure of the hydraulic fluid in the line 150.

An interface 160 comprising a touchscreen, a keypad, or other suitable interface is located on the baler 100 for inputting data into the microcontroller 148, and for inputting the selected density pressure into the microcontroller 148, at which the hydraulic fluid is to be regulated by the pressure regulator 151 for applying to the tensioning rams 131, to produce the bale of a selected bale density.

A power monitoring means for monitoring a characteristic indicative of power being drawn by the baler from the gearbox 124 comprises an inductive proximity sensor 155 similar to the second inductive proximity sensor 87 of the baler/bale wrapper 1. The proximity sensor 155 monitors the speed of rotation of a drive or a driven sprocket 156 transmitting drive from the gearbox 124 to the driven bale rotating rollers 119 and the driven rollers 114b and 114cfor determining if power is being drawn by the bale rotating rollers 119 and the driven rollers 114b and 114c. Signals from the proximity sensor 155 are read by the microcontroller 148.

The baler 100 also comprises a bale size monitoring system 157 for monitoring the size of the bale in the bale chamber 120 by volume. Any suitable monitoring system may be provided and will be well known to those skilled in the art. Signals from the monitoring system 157 are read by the microcontroller 148.

The microcontroller 148 reads signals from the ISOBUS 89 of the tractor 8 for reading a signal indicative of power being applied to the power take-off shaft 82 of the tractor 8, which in this embodiment of the invention is the rotational speed of the power take-off shaft 82.

The operation of the baler 100 in detecting and clearing a blockage in the infeed system 123 is substantially similar to the operation of the baler 3 of the baler/bale wrapper 1 in detecting and clearing a blockage in the infeed system 12 thereof as already described with reference to Figs. 1 to 10. The microcontroller 148 continuously reads the signals from the ISOBUS 89 of the tractor 8 and the proximity sensor 155, and compares the signal read from the proximity sensor 155 with the signal read from the ISOBUS 89 to determine the status of the overload clutch 127. If the comparison of the two signals is indicative of the overload clutch 127 having transitioned from the engaged state to the disengaged state, the microcontroller 148 reads the signal from the bale size monitoring system 157, and if the size of the bale exceeds a predefined size, the microcontroller 148 operates the secondary rams 77 of the infeed system 123 to operate the infeed platform 60 of the infeed system 123 into the relief state, and operates the pressure regulator 151 to reduce the pressure of the hydraulic fluid in the line 150 applied to the tensioning rams 131 by a predefined amount.

As explained in connection with the combined baler/bale wrapper 1 described with reference to Figs. 1 to 10, if a reduction in the pressure of the hydraulic fluid in the line 150 being applied to the tensioning rams 131 would provide a reasonable reduction in the power being drawn by the bale rotating rollers 119 and the driven rollers 114b and 114c when the baler 100 is being restarted, in order to increase the power available to the chopping rotor 69 to clear the blockage in the infeed system 123, the microcontroller 148 operates the pressure regulator 151 to reduce the pressure of the hydraulic fluid to the tensioning rams 131 in the line 150 by the predefined amount from the selected density pressure of the hydraulic fluid. In this embodiment of the invention since the tensioning rams 131 commence applying tensioning to the belts 112 when the volume of the bale in the bale chamber 22 exceeds 20% to 25% of the volume of the bale when fully formed, in this embodiment of the invention the predefined size of the bale is set at 25% of the volume of the fully formed bale. The amount by which the pressure of the hydraulic fluid in the line 150 is to be reduced from the selected density pressure, will be dependent on the type of crop material being baled, but in general, will be in the order of 80% to 90% of the selected density pressure of the hydraulic fluid.

In this case the predefined amount by which the pressure of the hydraulic fluid applied to the tensioning rams 131 is reduced from the selected density pressure is approximately 90% of the selected density pressure. In other words, the pressure of the hydraulic fluid applied to the tensioning rams 131 is reduced to approximately 10% of the selected density pressure of the hydraulic fluid while the blockage is being cleared.

On the microcontroller 148 determining that the size of the bale exceeds the predefined size, the microcontroller 158 outputs the alert signal to the alarm sounder 90 and to the visual display screen 92 in the cab of the tractor 8 alerting the driver to the blockage in the infeed system 123, so that the driver can stop the tractor. The alert signal also advises the driver to disengage the power take-off shaft 82 from the drive system of the tractor 8.

Thereafter, operation of the baler 100 to clear the blockage is similar to that already described with reference to the combined baler/bale wrapper 1 described with reference to Figs. 1 to 10.

On the blockage being cleared, the microcontroller 148 operates the secondary rams 77 to urge the infeed platform 60 into the operational state, and operates the pressure regulator 151 to increase the pressure of the hydraulic fluid in the line 150 to the selected density pressure.

If the signal read by the microcontroller 148 is indicative of the size of the bale in the bale chamber 120 being less than 25% of the full volume size of the bale, the microcontroller 148 operates the secondary rams 77 to urge the infeed platform 60 from the operational state to the relief state. The microcontroller 148 then outputs a signal to the alarm sounder 90 and to the visual display screen 91 in the cab of the tractor alerting the driver of the tractor 8 to the blockage in the infeed system 123 and advising the driver of the size of the bale being less than 25% of the full volume size of the bale, and instructing the driver of the tractor to disengage the power take-off shaft 82 from the power system of the tractor 8 and reengage the power take-off shaft 82 with the drive system of the tractor 8 to reengage the overload clutch 127 to clear the blockage in the infeed system 123.

Otherwise, operation of the baler 100 is similar to that of the baler/bale wrapper 1.

While the baler described with reference to Figs. 1 to 10 has been described as comprising a baler/bale wrapper, it will be readily apparent to those skilled in the art that the baler may be provided without the bale wrapper. In which case, if the baler was provided as a roller baler without a bale wrapper, the baler may comprise only two segments, namely, a fixed forward segment, and a rearward segment. In general, the rearward segment would be pivotally coupled to the fixed forward segment about an upper pivot axis, and would depend downwardly from the upper pivot axis, and would be pivotal rearwardly and upwardly about the upper pivot axis from a closed bale forming state to an open state for discharging a bale from the bale chamber. It will also be appreciated that while a particular type of roller baler has been described, the baler may be of other suitable types of roller balers.

While the belt baler has been described as comprising a particular type of belt baler, other suitable belt balers may be provided. Additionally, it is envisaged that the belt baler described with reference to Figs. 11 to 13 may also be provided as a combined baler/bale wrapper, with the bale wrapper located on the chassis rearwardly of the baler. A transfer means would be provided for transferring the bale from the belt baler onto the bale wrapper.

While particular constructions of roller balers and belt balers have been described, it will be readily apparent to those skilled in the art that the invention may be applied to roller and belt baler of other constructions.

While the balers have been described for use in baling crop material, it will be readily apparent to those skilled in the art that the balers may be used for baling any other material which would be suitable for baling into a cylindrical bale.

While the baler of the combined baler/bale wrapper 1 described with reference to Figs. 1 to 10 has been described as comprising a bale size monitoring means, it is envisaged that in some embodiments of the invention the bale size monitoring means may be dispensed with, and the bale size would be determined by the angular displacement of the closure segment from the closed state, which would be read from the first proximity sensor, or other suitable sensor.

While specific values of pressure reduction and angular values of the angular displacement of the closure segment about the main pivot axis from the closed state have been described in connection with the baler of the baler/bale wrapper of Figs. 1 to 10, it will be appreciated that other suitable percentages of pressure reduction and angular displacements may be used.

While specific values of pressure reduction and bale sizes at which the pressure of the hydraulic fluid to the tensioning rams of the belt baler described with reference to Figs. 11 to 13 have been described, other suitable values of pressure reduction and bale sizes may be used. It will also be appreciated that in the roller baler described with reference to Figs. 1 to 10, other suitable values of bale size at which the hydraulic pressure to the main rams is reduced may be used.

While the overload cut-out means has been described as comprising an overload clutch of a particular type, any other suitable overload cut-out means may be provided, and the overload cut-out means may be located in any suitable location, and in some embodiments of the invention, may be integral with the baler, for example, the overload cut-out means may be located in between the input shafts and the gearbox.

## Claims

1. A method for clearing a blockage in an infeed system in a baler, the baler comprising a pressing means adapted to rotate and press material to form the material into a cylindrical bale, and the infeed system to feed the material into the pressing means, **characterised in that** the method comprising reducing the pressure applied by the pressing means to the material therein on a blockage occurring in the infeed system.

2. A method as claimed in Claim 1 **characterised in that** the pressure applied by the pressing means to the material therein is reduced by a predefined amount.

3. A method as claimed in Claim 1 or 2 **characterised in that** the predefined amount, by which the pressure being applied by the pressing means to the material therein is reduced, lies in the range of 50% to 90% of a pressure at which the pressing means is set to press the material therein or lies in the range of 50% to 90% of the pressure applied by the pressing means to the material therein just prior to the occurrence of the blockage.

4. A method as claimed in any preceding claim **characterised in that** the pressure applied by the pressing means to the material therein is reduced if the bale being formed in the pressing means is equal to or exceeds a predefined size.

5. A method as claimed in any preceding claim **characterised in that** the pressure applied by the pressing means to the material therein is maintained at the reduced pressure until the blockage has been cleared.

6. A method as claimed in any preceding claim **characterised in that** the pressing means comprises at least one pressure inducing hydraulic ram for applying the pressure to the material therein, and the pressure applied to the material in the pressing means is reduced by reducing pressure of hydraulic fluid applied to the at least one pressure inducing ram.

7. A method as claimed in Claim 6 **characterised in that** the pressing means comprises at least two parts, which together define a bale chamber in which the bale is rotated, pressed and formed, at least one of the parts being moveable relative to the other one of the parts from a closed state defining the bale chamber to an open state for accommodating discharge of a bale from the bale chamber, and the at least one pressure inducing hydraulic ram cooperates with the moveable part for applying pressure to the crop material in the pressing means.

8. A method as claimed in Claim 6 **characterised in that** the pressing means comprises at least one belt defining a bale chamber and configured to rotate and press the material in the bale chamber, the at least one belt being tensioned by the at least one pressure inducing ram for applying pressure to the material in the bale chamber.

9. A method as claimed in any preceding claim **characterised in that** the infeed system is configurable from an operational state for urging material into the pressing means, and a relief state to at least partly relieve a blockage occurring therein.

10. A baler comprising a pressing means adapted to rotate and press material to form the material into a cylindrical bale, an infeed system to feed the material into the pressing means, **characterised in that** a control means is responsive to a signal indicative of the occurrence of a blockage in the infeed system for reducing the pressure applied by the pressing means to the material therein.

11. A baler as claimed in Claim 10 **characterised in that** the pressing means comprises at least one pressure inducing hydraulic ram for applying the pressure to the material therein, and the control means is configured to reduce pressure of hydraulic fluid applied to the at least one pressure inducing ram to reduce the pressure applied to the material in the pressing means.

12. A baler as claimed in Claim 11 **characterised in that** the pressing means comprises at least two parts, which together define a bale chamber in which the bale is rotated, pressed and formed, at least one of the parts being moveable relative to the other one of the parts from a closed state defining the bale chamber to an open state for accommodating discharge of a bale from the bale chamber, and the at least one pressure inducing hydraulic ram cooperates with the moveable part for applying pressure to the crop material in the pressing means.

13. A baler as claimed in Claim 11 **characterised in that** the pressing means comprises at least one belt defining a bale chamber and configured to rotate and press the material in the bale chamber, the at least one belt being tensioned by the at least one pressure inducing ram for applying pressure to the material in the bale chamber.

14. A baler as claimed in any of Claims 10 to 13 **characterised in that** the infeed system is operable by the control means in response to a blockage in the infeed system from an operational state for urging material into the pressing means, to a relief state for at least partly relieving the blockage.

15. A baler as claimed in any of Claims 10 to 14 **characterised in that** the control means is configured to output signals to a towing vehicle towing the baler in response to a blockage occurring in the infeed system, the signals being convertible to human sensory perceptible signals indicative of a request to deactivate power being transmitted by the towing vehicle to the baler, and subsequently to reactivate the power being transmitted from the towing vehicle to the baler.
